# EUROPEAN PATENT SPECIFICATION

(11) **EP 0 321 251 B1**
(45) Date of publication and mention of the grant of the patent: **01.06.1994**
(21) Application number: 88311889.5
(22) Date of filing: 15.12.1988
(51) Int. Cl.: G11B 20/18

(54) **Method for managing information concerning defects on storage media**
Verfahren zur Behandlung von Informationen, betreffend Fehler auf Speichermedien
Méthode pour gérer l'information quant aux défauts sur des milieux de stockage

(30) Priority: 15.12.1987 JP 316862/87
(43) Date of publication of application: 21.06.1989
(73) Proprietor: SHARP KABUSHIKI KAISHA, Osaka 545 (JP)
(72) Inventor: Yamanaka, Toshihiro, Ikoma-shi Nara-ken (JP); Maeda, Shigemi, Yamatokoriyama-shi Nara-ken (JP); Horie, Nobuyuki, Mikasaryo, Yamatokoriyama-shi Nara-ken (JP)
(74) Representative: Brown, Kenneth Richard

(56) References cited:
- EP-A- 0 271 335
- EP-A- 0 272 029
- DE-A- 3 728 857
- IBM TECHNICAL DISCLOSURE BULLETIN. vol. 26, no. 10B, March 1984, NEW YORK US pages 5769 - 5770; R.X.ARROYO ET AL.: "SOFT-SECTORED HARD FILE DEFECTIVE SECTOR MAPPING"
- PATENT ABSTRACTS OF JAPAN vol. 9, no. 214 (P-384)(1937) 31 August 1985, & JP-A-60 074158 (MATSUSHITA DENKI SANGYO K.K.) 26 April 1985,
- PATENT ABSTRACTS OF JAPAN vol. 10, no. 188 (P-473)(2244) 03 July 1986, & JP-A-61 032266 (FUJITSU LTD.) 14 February 1986,
- IBM TECHNICAL DISCLOSURE BULLETIN. vol. 27, no. 10A, March 1985, NEW YORK US page 5604 "METHOD FOR TRACKING EMBEDDED DEFECTIVE DISK OR DISKETTE SECTORS"
- IBM TECHNICAL DISCLOSURE BULLETIN. vol. 29, no. 6, November 1986, NEW YORK US pages 2607 - 2608; "METHOD TO MANAGE SECTOR DEFECTS"

## Description

The present invention relates generally to a defect information managing method, and more particularly, to a defect information managing method for protecting and managing information concerning a defect which exists on a storage medium. The invention also relates to a device for recording and reproducing data on such a storage medium.

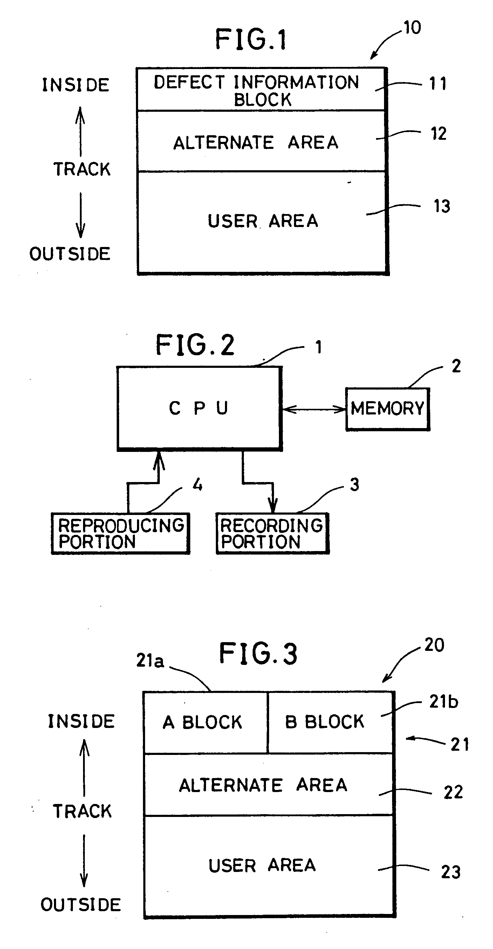

Fig. 1 is an illustration showing a track structure of a storage medium applied to a storage device which is background art in relation to the present invention. In Fig. 1, a storage medium is provided with a defect information block 11, an alternate area 12, a user area 13 and the like in the order, for example, from an inside track to an outside track. Information concerning a defect of the storage medium is stored in each track of the defect information block 11. The information concerning a defect includes, for example, information indicating which track is defective. A defective portion of the user area 13 is replaced with the alternate area 12, in which information in the defective portion is stored. In the storage medium 10, the defective portion of the track in the user area 13 is replaced with the alternate area 12 based on the information stored in the defect information block 11, so that the reliability is improved.

Meanwhile, if and when digital information is written into a magnetic disk such as a hard disk or a floppy disk, the information is stored with magnetisation being completely inverted corresponding to binary information, so that new information can be overwritten on old information without erasing the old information. However, in the case of a magneto-optic disk, the old information must be erased once before writing. Therefore, in the magneto-optic disk, if an accident such as instantaneous power failure occurs when the information concerning a defect in the above described defect information block 11 is updated, the information on the disk is destroyed. Thus, in the worst case, the entire system cannot be returned. In addition, if the information concerning a defect has been erased, it is liable to be erroneously recognised that no information concerning a defect is registered.

IBM Technical Disclosure Bulletin, Vol. 26, No. 10B, March 1984 reflecting the preambles of the independent claims discloses, at pages 5769-5770, the provision on a magnetic disk of a "defective sector map" which stores disk defect information, and a second such map which is an exact duplicate of the first, and so provides a back-up for data recovery should the original map become defective.

EP-A-0 272 029 (which constitutes part of the state of the art for the designated countries DE and FR by virtue of Article 54(3) EPC), discloses the provision on an optical disk of localised groupings ("blocks") of data sectors, alternate sectors and mapping sectors. Two mapping sectors are provided in each block, so that the data read from the second mapping sector can be used if the first sector data includes an error.

An object of the present invention is to protect information concerning a defect which exists on a storage medium if an accident occurs when the information is updated and registered again.

Briefly stated, according to the present invention, first and second defect information storage areas in which information concerning a defect of the storage medium can be stored are provided on the storage medium, a selected one of the first and second areas on the storage medium being updated when the defect information is updated.

In accordance with a first aspect of the invention, there is provided a method for a managing defect information stored on a data storage medium (20), said defect information relation to one or more defective portions of the data storage area (22, 23) of said medium and being stored in first and second storage areas (21a, 21b) of the medium, characterised in that, in the process of recording or reproducing data on the storage medium, only defect information in a selected one of said first and second storage areas is used and, in the process of up-dating the stored defect information, the up-dated defect information is stored only in the one of said first and second storage areas not so selected.

In accordance with a second aspect of the invention, there is provided a device for recording and reproducing data on a data storage medium, the device being capable of managing defect information by the method of the first aspect of the invention.

In the method of the first aspect, the area to be updated may be an area other than an area in which the newest information is stored. The area to be updated may be an area in which the number of registrations of defect information is smaller.

According to the present invention, either one of the first and second defect information storage areas on the storage medium is updated. Thus, even if an accident occurs during updating, the information concerning a defect always remains in either one of the defect information storage areas, never to disappear.

The present invention will become more apparent from the following detailed description of preferred embodiments, taken in conjunction with the accompanying drawings, in which:
Fig. 1 is an illustration showing a track structure of a storage medium applied to a storage device which is background art in relation to the present invention;
Fig. 2 is a schematic block diagram showing an electrical structure of a magneto-optical type storage device according to one embodiment of the present invention;
Fig. 3 is an illustration showing a track structure of a magneto-optic storage medium according to one embodiment of the present invention; and
Figs 4A to 4C are flowcharts for explaining an operation according to one embodiment of the present invention.

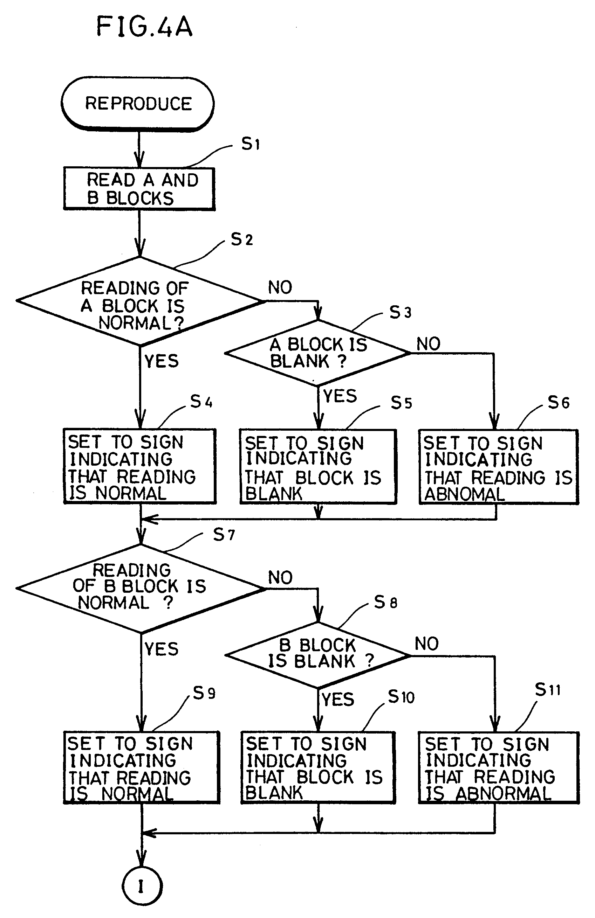

Fig. 2 is a schematic block diagram showing an electrical structure of a magneto-optical type storage device according to one embodiment of the present invention. In Fig. 2, a memory 2, a recording portion 3 and a reproducing portion 4 are connected to a CPU (Central Processing Unit) 1. The memory 2 comprises a ROM (Read-Only Memory) storing an operation program of the CPU 1 based on flowcharts of Figs. 4A to 4C as described below, and a RAM (Random Access Memory) having a work area. The recording portion 3 is used for writing information into a magneto-optic disk, and the reproducing portion 4 is used for reading the information recorded on the magneto-optic disk.

Fig. 3 is an illustration showing a track structure of a magneto-optic storage medium according to one embodiment of the present invention. In Fig. 3, a magneto-optic storage medium 20 is provided with a defect information block 21, an alternate area 22, a user area 23 and the like in the order, for example, from an inside track to an outside track. The alternate area 22 and the user area 23 are the same as those shown in Fig. 1 and so description thereof is omitted. The defect information block 21 is divided into an A block 21a and a B block 21b. Information concerning a defect comprises, for example, a track number of a defective track in the user area 23 and the number of registrations (or the number of times of registration) of the information concerning a defect. When the defect information block 21 is updated or registered again, the A block 21a and the B block 21b are alternately reloaded so that information always remains in one of the blocks even if information in the other block is erased before writing. Therefore, even if an accident such as instantaneous power failure occurs during updating, information before the accident remains. Thus, if and when the system is automatically returned or returned by, for example, turning on again the power supply, the worst situation can be prevented in which the system is down by an impossibility to reproduce defect information and a malfunction is caused by erroneous recognition of the defect information.

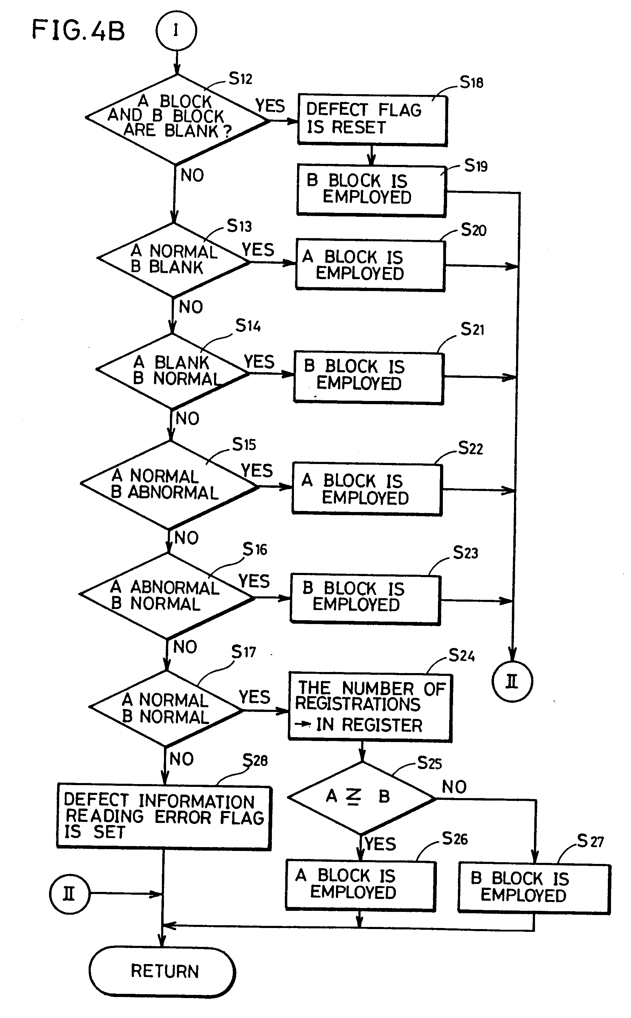

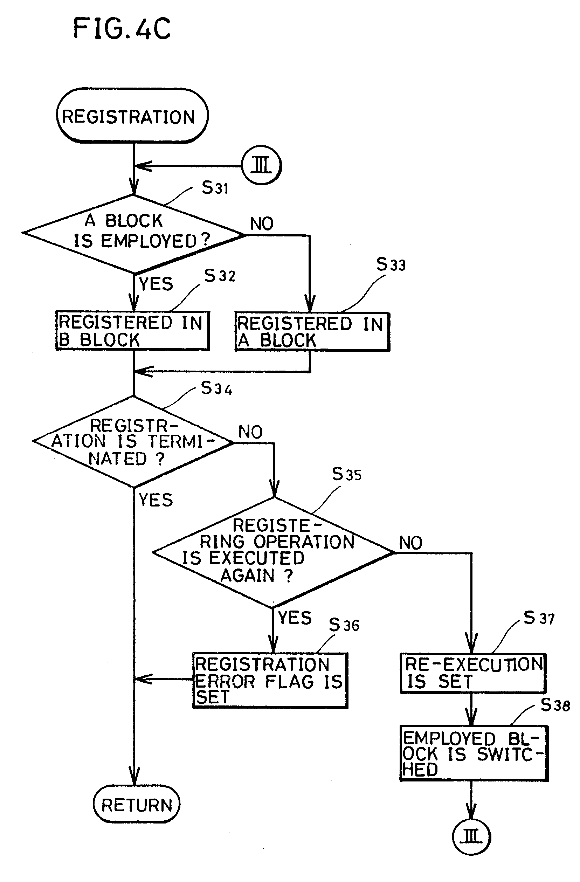

Figs. 4A to 4C are flowcharts for explaining an operation according to one embodiment of the present invention, where Figs. 4A and 4B show a reproducing operation and Fig. 4C shows a registering operation. Description is made first of the reproducing operation.

In the step S1 (referred to as S1 in the figure), the A block 21a and the B block 21b in the defect information block 21 in the storage medium 20 are read. Subsequently, in the step S2, it is determined whether or not reading of the A block 21a is normal. If the reading is not normal, it is then determined in the step S3 whether or not the A block 21a is blank. If the reading of the A block 21a is normal, an A block reading flag is set to a sign indicating that reading is normal, in the step S4. If the A block 21a is blank, the flag is set to a sign indicating that the A block is blank, in the step S5. On the other hand, if the reading is abnormal, the flag is set to a sign indicating that reading is abnormal, in the step S6. Subsequently, in the step S7, it is determined whether or not reading of the B block 21b is normal. If the reading is not normal, it is then determined in the step S8 whether or not the B block 21b is blank. If the reading of the B block 21b is normal, a B block reading flag is set to a sign indicating that reading is normal, in the step S9. If the B block 21b is blank, the flag is set to a sign indicating that the B block is blank, in the step S10. On the other hand, if the reading is abnormal, the flag is set to a sign indicating that reading is abnormal, in the step S11.

Then, in the steps S12 to S17, a block to be used when defect information is registered, i.e. a block holding the stored content, is determined based on the above described A block reading flag and B block reading flag. If both the A block 21a and the B block 21b are blank, the defect information does not exist. Thus, in the step S18, a defect flag is reset. Subsequently, in the step S19, the B block 21b is employed. Certainly, the A block 21a may be employed. If the reading of the A block 21a is normal and the B block 21b is blank, the A block 21a is employed, in the step S20. If the A block 21a is blank and the reading of the B block 21b is normal, the B block 21b is employed, in the step S21. If the reading of the A block 21a is normal and the reading of the B block 21b is abnormal, the A block 21a is employed, in the step S22. If the reading of the A block 21a is abnormal and the reading of the B block 21b is normal, the B block 21b is employed, in the step S23. If the reading of both the A block 21a and the B block 21b are normal, the number of registrations of the information concerning a defect stored in each block is stored in a register in the step S24, and the respective numbers of registrations are compared with each other in the step S25. If the number of registrations in the A block 21a is the number of registrations in the B block 21b or more, the A block 21a is employed in the step S26; otherwise the B block 21b would be employed in the step S27. In cases other than the above described cases, a defect information reading error flag indicating that reading of information concerning a defect is abnormal is set in the step S28.

Description is now made on a registering operation of the defect information block. When information concerning a defect must be updated and registered again, the block other than the block employed in the above described reproducing operation is updated and registered. First, in the step S31, it is determined whether or not the A block 21a is employed. If the A block 21a is employed, the new number of registrations is added to the number of registrations of the information concerning a defect stored in the A block 21a, to be registered in the B block 21b, in the step S32. On the other hand, if the B block 21b is employed, the new number of registrations is added to the number of registrations of the information concerning a defect stored in the B block 21b, to be registered in the A block 21a, in the step S33. Subsequently, in the step S34, it is determined whether or not registration is normally terminated. If the registration is normally terminated, the operation is terminated. On the other hand, if the registration is not normally terminated, it is determined in the step S35 whether or not the registering operation is executed again. At this time point of determination, if one of the blocks has not been reloaded yet, the block is reloaded. More specifically, re-execution of the registering operation is set in the step S37, and the employed block is switched so that the block is reloaded in the step S38. Considering a case in which both the blocks are reloaded, if both the blocks are in error, a registration error flag is set in the step S36 in order to inform the fact, so that the operation is terminated.

Meanwhile, in the above described registering operation, if both the A block 21a and the B block 21b are blank at the time of reproduction and no defect information exists, a defect flag is reset. Thus, the registering operation is not performed.

In the above described manner, if and when the defect information block 21 shown in Fig. 3 is registered again or updated and registered, both the blocks are read and either one of the blocks is updated and registered and then, the block is switched so that the remaining block is reloaded. Thus, even if the content of the block to be registered is erased during registration, the content of the other block remains, so that the stored content is held.

## Claims

1. A method for managing defect information stored on a data storage medium (20), said defect information relating to one or more defective portions of the data storage area (22, 23) of said medium and being stored in first and second storage areas (21a, 21b) of the medium, characterised in that, in the process of recording or reproducing data on the storage medium (20), only defect information in a selected one of said first and second storage areas (21a, 21b) is used and, in the process of up-dating the stored defect information, the up-dated defect information is stored only in the one of said first and second storage areas (21a, 21b) not so selected.

2. A method for managing defect information according to claim 1, wherein the one of the first and second storage areas (21a, 21b) to be updated is an area other than an area in which the newest defect information is stored.

3. A method for managing defect information according to claim 1, wherein the numbers of registrations of defect information are respectively stored in said first and second storage areas (21a, 21b), the respective numbers of registrations in said areas are compared with each other, and the storage area having the smaller number of registrations is updated.

4. A method for managing defect information according to claim 1, comprising, in the recording or reproducing process, the steps of determining, for each of said first and second storage areas (21a, 21b), whether the storage area stores no defect information, normal defect information or abnormal defect information, and selecting a said one of the first and second storage areas which stores normal defect information.

5. A method for managing defect information according to claim 4, wherein, in the case that both said first and second storage areas (21a, 21b) store normal defect information, the storage area which stores the greater number of defect registrations is selected.

6. A method for managing defect information according to claim 5, wherein the storage area (21a, 21b) selected in the recording or reproducing process stores the newest defect information.

7. A method for managing defect information according to any one of the preceding claims, wherein the process of up-dating the stored defect information comprises the steps of reading the defect information stored in the storage area (21a, 21b) selected in the recording or reproduction process and storing the read defect information together with any new defect information in the storage area not selected in the recording or reproducing process.

8. A method for managing defect information according to any one of the preceding claims, wherein, after up-dating, in the absence of corruption to the stored defect information, the storage area (21a, 21b) which stores the up-dated defect information is selected for use in the recording or reproducing process.

9. A device for recording and reproducing data on a data storage medium (20) having first and second storage areas (21a, 21b) on which is stored defect information relating to one or more defective portions of the data storage area (22, 23) of said medium (20), the device being capable of managing said defect information by the method of any one of claims 1 to 8.

10. A device according to claim 9, which is capable of recording and reproducing data on a magneto-optic disk as said data storage medium (20).

## Patentansprüche

1. Verfahren zum Handhaben von auf einem Datenspeichermedium (20) abgespeicherter Information, die sich auf einen fehlerhaften Abschnitt des Datenspeicherbereichs (22, 23) des Mediums oder auf mehrere bezieht und die in einem ersten und zweiten Speicherbereich (21a, 21b) des Mediums abgespeichert ist, **dadurch gekennzeichnet**, daß beim Vorgang des Aufzeichnens von Daten auf dem Speichermedium (20) oder des Wiedergebens von Daten vom Speichermedium nur Fehlerinformation aus einem ausgewählten Bereich des ersten und zweiten Speicherbereichs (21a, 21b) verwendet wird, und beim Vorgang des Aktualisierens der abgespeicherten Fehlerinformation die abgespeicherte Fehlerinformation nur in demjenigen Bereich des ersten und zweiten Speicherbereichs (21a, 21b) abgespeichert wird, der nicht ausgewählt wurde.

2. Verfahren zum Handhaben von Fehlerinformation nach Anspruch 1, bei dem der eine Bereich des ersten und zweiten Speicherbereichs (21a, 21b), der zu aktualisieren ist, ein anderer Bereich als der Bereich ist, in dem die neueste Fehlerinformation abgespeichert ist.

3. Verfahren zum Handhaben von Fehlerinformation nach Anspruch 1, bei dem die Aufzeichnungsanzahlen von Fehlerinformation jeweils im ersten und zweiten Speicherbereich (21a, 21b) abgespeichert werden, wobei die jeweiligen Aufzeichnungsanzahlen in diesen Bereichen miteinander verglichen werden und der Speicherbereich mit der kleineren Aufzeichnungsanzahl aktualisiert wird.

4. Verfahren zum Handhaben von Fehlerinformation nach Anspruch 1 mit den folgenden Schritten beim Wiedergabe- oder Aufzeichnungsvorgang: Ermitteln, für den ersten und den zweiten Speicherbereich (21a, 21b), ob der Speicherbereich keine Fehlerinformation, normale Fehlerinformation oder anomale Fehlerinformation speichert, und Auswählen desjenigen Bereichs des ersten und zweiten Speicherbereichs, der normale Fehlerinformation speichert.

5. Verfahren zum Handhaben von Fehlerinformation nach Anspruch 4, bei dem dann, wenn sowohl der erste als auch der zweite Speicherbereich (21a, 21b) normale Fehlerinformation speichern, derjenige Speicherbereich ausgewählt wird, der die größere Zahl von Fehleraufzeichnungen speichert.

6. Verfahren zum Handhaben von Fehlerinformation nach Anspruch 5, bei dem der beim Aufzeichnungs- oder Wiedergabevorgang ausgewählte Speicherbereich (21a, 21b) die neueste Fehlerinformation speichert.

7. Verfahren zum Handhaben von Fehlerinformation nach einem der vorstehenden Ansprüche, bei dem der Vorgang des Aktualisierens der abgespeicherten Fehlerinformation die Schritte des Lesens der Fehlerinformation, die in dem beim Wiedergabe- oder Aufzeichnungsvorgang ausgewählten Speicherbereich (21a, 21b) abgespeichert wurde, und des Abspeicherns der gelesenen Fehlerinformation zusammen mit irgendeiner neuen Fehlerinformation im Speicherbereich, der beim Aufzeichnungs- oder Wiedergabevorgang nicht ausgewählt wurde, beinhaltet.

8. Verfahren zum Handhaben von Fehlerinformation nach einem der vorstehenden Ansprüche, bei dem nach dem Aktualisieren beim Fehlen einer Verfälschung der abgespeicherten Fehlerinformation derjenige Speicherbereich (21a, 21b) zur Verwendung beim Aufzeichnungs- oder Wiedergabevorgang ausgewählt wird, der die aktualisierte Fehlerinformation speichert.

9. Vorrichtung zum Aufzeichnen und Wiedergeben von Daten auf einem Datenspeichermedium (20) mit einem ersten und einem zweiten Speicherbereich (21a, 21b), in denen Fehlerinformation betreffend einen fehlerhaften Abschnitt des Datenspeicherbereichs (22, 23) des Mediums (20) oder betreffend mehrere solche Abschnitte abgespeichert ist, welche Vorrichtung dazu in der Lage ist, die fehlerhafte Information durch ein Verfahren nach einem der Ansprüche 1 bis 8 zu handhaben.

10. Vorrichtung nach Anspruch 9, die dazu in der Lage ist, Daten auf einer magnetooptischen Platte als Datenspeichermedium (20) aufzuzeichnen und Daten davon wiederzugeben.

## Revendications

1. Procédé pour gérer une information de défaut mémorisée sur un support de stockage de données (20), ladite information de défaut étant relative à une ou plusieurs parties défectueuses de la zone de mémorisation de données (22, 23) dudit support et étant mémorisée dans des première et seconde zones de mémorisation (21a, 21b) du support, caractérisée en ce que, dans le processus d'enregistrement ou de reproduction de données sur le support de stockage (20), seulement une information de défaut dans une zone sélectionnée desdites première et seconde zones de mémorisation (21a, 21b) est utilisée et, dans le processus de mise à jour de l'information de défaut mémorisée, l'information de défaut mise à jour est mémorisée seulement dans celle desdites première et seconde zones de mémorisation (21a, 21b) qui n'est pas ainsi sélectionnée.

2. Procédé pour gérer une information de défaut selon la revendication 1, dans lequel celle des première et seconde zone de mémorisation (21a, 21b) à mettre à jour est une zone autre qu'une zone dans laquelle l'information de défaut la plus récente est mémorisée.

3. Procédé pour gérer une information de défaut selon la revendication 1, dans lequel les nombres d'écritures d'un défaut d'information sont respectivement mémorisés dans lesdites première et seconde zones de mémorisation (21a, 21b), les nombres d'écritures respectifs dans lesdites zones sont comparés l'un à l'autre, et la zone de mémorisation ayant le nombre d'écriture le plus faible est mise à jour.

4. Procédé pour gérer une information de défaut selon la revendication 1, comprenant, dans les processus d'enregistrement ou de reproduction, les étapes consistant à déterminer, pour chacune desdites première et seconde zones de mémorisation (21a, 21b), si le zone de mémorisation ne mémorise aucune information de défaut, mémorise une information de défaut normale ou mémorise une information de défaut anormale, et à sélectionner la zone des première et seconde zones de mémorisation qui mémorise une information de défaut normale.

5. Procédé pour gérer une information de défaut selon la revendication 4, dans lequel, dans le cas où les première et seconde zones de mémorisation (21a, 21b) mémorisent toutes deux une information de défaut normale, la zone de mémorisation qui mémorise le nombre d'écritures de défaut le plus grand est sélectionné.

6. Procédé pour gérer une information de défaut selon la revendication 5, dans lequel la zone de mémorisation (21a, 21b) sélectionnée lors du processus d'enregistrement ou de reproduction mémorise l'information de défaut la plus récente.

7. Procédé pour gérer une information de défaut selon l'une quelconque des revendications précédentes, dans lequel le processus de mise à jour de l'information de défaut mémorisée comprend les étapes consistant à lire l'information de défaut mémorisée dans la zone de mémorisation (21a, 21b) sélectionnée lors du processus de reproduction et à mémoriser l'information de défaut lue conjointement avec une nouvelle information de défaut quelconque dans la zone de mémorisation non sélectionnée lors du processus d'enregistrement ou de reproduction.

8. Procédé pour gérer une information de défaut selon l'une quelconque des revendications précédentes, dans lequel, après mise à jour, en l'absence d'altération de l'information de défaut mémorisée, la zone de mémorisation (21a, 21b) qui mémorise l'information de défaut mise à jour est sélectionnée afin d'être utilisée dans le processus d'enregistrement ou de reproduction.

9. Dispositif pour enregistrer et reproduire des données sur un support de stockage de données (20) ayant des première et seconde zones de mémorisation (21a, 21b) sur lesquelles est mémorisée une information de défaut relative à une ou plusieurs parties défectueuses de la zone de mémorisation de données (22, 23) dudit support (20), le dispositif étant capable de gérer ladite information de défaut par la mise en oeuvre du procédé selon l'une quelconque des revendications 1 à 8.

10. Dispositif selon la revendication 9, capable d'enregistrer et de reproduire des données sur un disque magnéto-optique constituant ledit support de stockage de données (20).
